(19)

**Europäisches Patentamt**
**European Patent Office**
**Office européen des brevets**

(11) **EP 3 675 035 A1**

(12) **EUROPEAN PATENT APPLICATION**
published in accordance with Art. 153(4) EPC

(43) Date of publication:
**01.07.2020 Bulletin 2020/27**

(51) Int Cl.:
**G06T 7/292** (2017.01)

(21) Application number: **18847993.5**

(22) Date of filing: **28.05.2018**

(86) International application number:
**PCT/CN2018/088621**

(87) International publication number:
**WO 2019/037498 (28.02.2019 Gazette 2019/09)**

(84) Designated Contracting States:
**AL AT BE BG CH CY CZ DE DK EE ES FI FR GB GR HR HU IE IS IT LI LT LU LV MC MK MT NL NO PL PT RO RS SE SI SK SM TR**
Designated Extension States:
**BA ME**
Designated Validation States:
**KH MA MD TN**

(30) Priority: **25.08.2017 CN 201710743357**

(71) Applicant: **Tencent Technology (Shenzhen) Company Limited**
**Shenzhen, Guangdong 518057 (CN)**

(72) Inventors:
• **LUO, Wenhan**
**Shenzhen**
**Guangdong 518057 (CN)**
• **SUN, Peng**
**Shenzhen**
**Guangdong 518057 (CN)**
• **LIU, Wei**
**Shenzhen**
**Guangdong 518057 (CN)**

(74) Representative: **AWA Sweden AB**
**P.O. Box 45086**
**104 30 Stockholm (SE)**

(54) **ACTIVE TRACKING METHOD, DEVICE AND SYSTEM**

(57) The present invention relates to the field of machine learning, and provides an active tracking method. The method comprises: obtaining an $i^{th}$ image frame photographed by a camera (201); inputting the $i^{th}$ image frame to a deep network (202), the deep network comprising a feature extraction network and a policy function; extracting an image feature of the image frame by means of the feature extraction network (203); calculating a respective output probability of n output actions according to the image feature by means of the policy function (204), $n \geq 2$; selecting the maximum output probability from the output probabilities of the n output actions (205); and controlling the camera to execute the output action corresponding to the maximum output probability (206). The workload for parameter adjustment is reduced because only one depth network is required for parameter adjustment, and there is no need to adjust the parameters of a moving target tracking module and a camera controlling module, separately.

acquiring the i-th image frame captured by a camera —201

sending the i-th image frame to a feature extraction network of a deep network —202

extracting image features of the image frame using the feature extraction network —203

calculating respective output probabilities of n output actions using the image features and the strategy function —204

selecting the maximum output probability from the output probabilities of the n output actions —205

controlling the camera to perform the output action corresponding to the maximum output probability —206

**FIG. 2a**

EP 3 675 035 A1

## Description

The present application claims priority to Chinese Patent Application No. 2017107433572, titled "Active Tracking Method, Device and System", filed with the National Intellectual Property Administration of China on August 25, 2017, which is incorporated herein by reference in its entirety.

## Technical Field

The present application relates to machine learning, and particularly, to an active tracking technology.

## Background

In the fields of machines such as robots and unmanned drones, one of important research directions is the detection and tracking of moving objects using computer vision. A machine is usually equipped with a single camera to enable continuous tracking of moving objects by analyzing image frames captured by the single camera.

An active tracking technology in related art is mainly implemented by a moving object tracking module and a camera controlling module. The moving object tracking module outputs a tracking result of the moving object to the camera controlling module, and the camera controlling module maps the tracking result outputted by the moving object tracking module to an action of the camera and controls the camera to move so as to keep the moving object as close to the middle of the image frame captured by the camera as possible.

Since the camera controlling module and the moving object tracking module are two modules running independently from each other, when working parameters of one of the modules are adjusted, working parameters of the other module have to be adjusted jointly at the same time to obtain the optimal active tracking performances. It is difficult, however, to adjust the two groups of working parameters to a reasonable state simultaneously in practice since the parameters have large adjustable ranges.

## Summary

In order to solve the problem that since the independently running camera controlling module and moving object tracking module have working parameters that are difficult to be simultaneously adjusted to a reasonable state when the parameters of the two modules are adjusted jointly, various embodiments of the present application provide an active tracking method, an active tracking device and an active tracking system, which use an end-to-end deep network to determine actions to be executed according to image frames captured by the camera when tracking a moving object using a camera. The technical solutions are as follows.

A first aspect provides is an active tracking method applicable to a terminal. The active tracking method may include:

acquiring an i-th image frame captured by a camera, wherein the i-th image frame includes a moving object, and i is a natural number;

inputting the i-th image frame into a deep network which includes a feature extraction network and a strategy function;

extracting image features of the i-th image frame using the feature extraction network;

calculating respective output probabilities of n output actions using the image features and the strategy function, wherein the output actions are actions for controlling the camera, n is a natural number, and $n \geq 2$;

selecting a maximum output probability from the output probabilities of the n output actions; and

controlling the camera to execute the output action corresponding to the maximum output probability to track the moving object.

A second aspect provides is a deep network training method applied to a training terminal. The training method may include:

constructing the three-dimensional virtual environment which includes a tracker and the moving object, wherein the tracker is for tracking the moving object in the three-dimensional virtual environment and collecting image frames in a first-person view when tracking the moving object, and the moving object is for moving along a preset route in the three-dimensional virtual environment;

acquiring a sample image frame acquired by the tracker;

calculating a reward value corresponding to the sample image frame using a real-time tracking position of the moving object relative to the tracker in the three-dimensional virtual environment and a preset expected object position, wherein the reward value is for representing the matching degree of the real-time tracking position and the expected object position;

inputting the sample image frame into the feature extraction network of the deep network to obtain the image features, and inputting the image features into a preset evaluation function to calculate an evaluated value of the reward value corresponding to the sample image frame, wherein the evaluated value of the reward value represents the matching degree of a predicted tracking position predicted by the evaluation function and the expected object position; and

training the deep network and the evaluation function using an error back propagation algorithm and an error between the reward value and the evaluated value of the reward value.

A third aspect provides an active tracking device, including:

a first acquiring module, for acquiring an i-th image frame captured by a camera, wherein the i-th image frame includes a moving object;

a first inputting module, for inputting the image frame into a deep network which includes a feature extraction network and a strategy function, the deep network is a neural network trained in advance using a three-dimensional virtual environment;

an extracting module, for extracting image features of the i-th image frame using the feature extraction network;

a first calculating module, for calculating respective output probabilities of n output actions using the image features and the strategy function, wherein the output actions are actions for controlling the camera, and $n \geq 2$;

a selecting module, for selecting a maximum output probability from the output probabilities of the n output actions;

and a controlling module, for controlling the camera to perform the output action corresponding to the maximum output probability to track the moving object.

A fourth aspect provides a deep network training device for training the deep network in the active tracking device provided in the third aspect. The deep network training device may include:

a constructing module, for constructing the three-dimensional virtual environment which includes a tracker and the moving object, wherein the tracker is used for tracking the moving object in the three-dimensional virtual environment and acquiring image frames in a first-person view when tracking the moving object, and the moving object is for moving along a preset route in the three-dimensional virtual environment;

a second acquiring module, for acquiring a sample image frame acquired by the tracker;

a second calculating module, for calculating a reward value corresponding to the sample image frame using a real-time tracking position of the moving object relative to the tracker in the three-dimensional virtual environment and a preset expected object position, wherein the reward value represents the matching degree of the real-time tracking position and the expected object position;

a second inputting module, for inputting the sample image frame into the feature extraction network of the deep network to obtain the image features;

the inputting module is further for inputting the image features into a preset evaluation function to calculate an evaluated value of the reward value corresponding to the sample image frame, wherein the evaluated value of the reward value represents the matching degree of a predicted tracking position predicted by the evaluation function and the expected object position; and

a training module, for training the deep network and the evaluation function using an error back propagation algorithm and an error between the reward value and the evaluated value of the reward value.

A fifth aspect provides an active tracking system. The system may include: a server and a terminal which are connected via a network;
the terminal is for acquiring an i-th image frame captured by a camera, wherein the i-th image frame includes a moving object;
the terminal is further for sending the i-th image frame to the server;
the server includes a deep network which includes a feature extraction network and a strategy function;
the server is for extracting image features of the i-th image frame using the feature extraction network;
the server is further for calculating respective output probabilities of n output actions using the image features and the strategy function, wherein the output actions are actions for controlling the camera, and $n \geq 2$;
the server is further for selecting a maximum output probability from the output probabilities of the n output actions;
the server is further for generating a control instruction according to the output action corresponding to the maximum output probability and sending the control instruction to the terminal; and
the terminal is further for controlling the camera to perform the output action corresponding to the maximum output probability according to the control instruction to track the moving object.

A sixth aspect provides a terminal. The terminal may include a processor and a memory storing at least one instruction, at least one program, a code set or an instruction set which is loadable and executable by the processor to implement the active tracking method of any of the first aspect of the present application and associated embodiments thereof.

A seventh aspect provides a terminal. The terminal may include a processor and a memory storing at least one instruction, at least one program, a code set or an instruction set which is loadable and executable by the processor to implement the active tracking method of any of the second aspect of the present application and associated embodiments thereof.

An eighth aspect provides a computer-readable storage medium storing at least one instruction, at least one program, a code set or an instruction set which is loadable and executable by the processor to implement the active tracking method of any of the first aspect of the present application and associated embodiments thereof.

A ninth aspect provides a computer-readable storage medium storing at least one instruction, at least one program, a code set or an instruction set which is loadable and executable by the processor to implement the deep network training method of any of the second aspect of the present application and associated embodiments thereof.

The technical solutions of embodiments of the present application may have the following effects:
the active tracking method in accordance with the present application, which is implemented based on an end-to-end deep network, acquires the i-th image frame captured by a camera, inputs the i-th image frame into the deep network, extracts the image features of the i-th image frame using the feature extraction network in the deep network, calculates the output probabilities corresponding to a plurality of output actions using the image features and the strategy function in the deep network, selects the maximum output probability from the output probabilities, and controls the camera to perform the output action corresponding to the maximum output probability to track the moving object. Since the deep network is an end-to-end network, good tracking performance of the deep network can be obtained by merely adjusting the parameters of the end-to-end deep network when training the deep network. There is no need to adjust parameters of the two independent modules, i.e., the moving object tracking module and the camera controlling module, thus the workload of the parameter adjustment is reduced. The deep network is integrally trained in the training process instead of training the moving object tracking module and the camera controlling module respectively, thus the training can enable the deep network to have parameters with high prediction accuracy, and improve the accuracy of the active tracking of the camera.

**Brief Description of the Drawings**

FIG. 1 is a schematic diagram of an application scenario of an active tracking method according to an embodiment of the present application;

FIG. 2a is a flow chart of an active tracking method according to an embodiment of the present application;

FIG. 2b is a schematic diagram of a working architecture of an active tracking method according to an embodiment of the present application;

FIG. 3a is a flow chart of another active tracking method according to an embodiment of the present application;

FIG. 3b is a schematic diagram of a working architecture of another active tracking method according to the embodiment of the present application;

FIG. 4a is a flow chart of yet another active tracking method according to an embodiment of the present application;

FIG. 4b is a schematic diagram of a working architecture of yet another active tracking method according to an embodiment of the present application;

FIG. 4c is a schematic diagram of a working flow of a convolutional neural network according to an embodiment of the present application;

FIG. 4d is a schematic diagram of a working flow of an LSTM neural network according to an embodiment of the present application;

FIG. 5a is a flow chart of a deep network training method according to an embodiment of the present application;

FIG. 5b is a schematic diagram of a three-dimensional virtual environment according to an embodiment of the present application;

FIG. 5c is a schematic diagram of a sample image frame acquired by an exemplary tracker according to an embodiment of the present application;

FIG. 5d is a schematic diagram of another three-dimensional virtual environment according to an embodiment of the present application;

FIG. 5e is a schematic diagram of a deep network training architecture according to an embodiment of the present application;

FIG. 6 is a flow chart of another deep network training method according to an embodiment of the present application;

FIG. 7a is a schematic diagram of a three-dimensional virtual environment according to an embodiment of the present application;

FIG. 7b is a schematic diagram of a sample image frame acquired by an exemplary tracker according to an embodiment of the present application;

FIG. 7c is a schematic diagram of another three-dimensional virtual environment according to an embodiment of the present application;

FIG. 7d is a schematic diagram of yet another three-dimensional virtual environment according to an embodiment of the present application;

FIG. 8 is a flow chart of a deep network testing method according to an embodiment of the present application;

FIG. 9 is a block diagram of an active tracking device according to an embodiment of the present application;

FIG. 10 is a block diagram of a deep network training device according to an embodiment of the present application;

FIG. 11 is a block diagram of an active tracking terminal according to an embodiment of the present application;

FIG. 12 is a block diagram of a training terminal according to an embodiment of the present application.

## Detailed Description

In order to make the objects, technical solutions, and advantages of the present application clearer, embodiments thereof will be described in further detail with reference to the accompanying drawings.

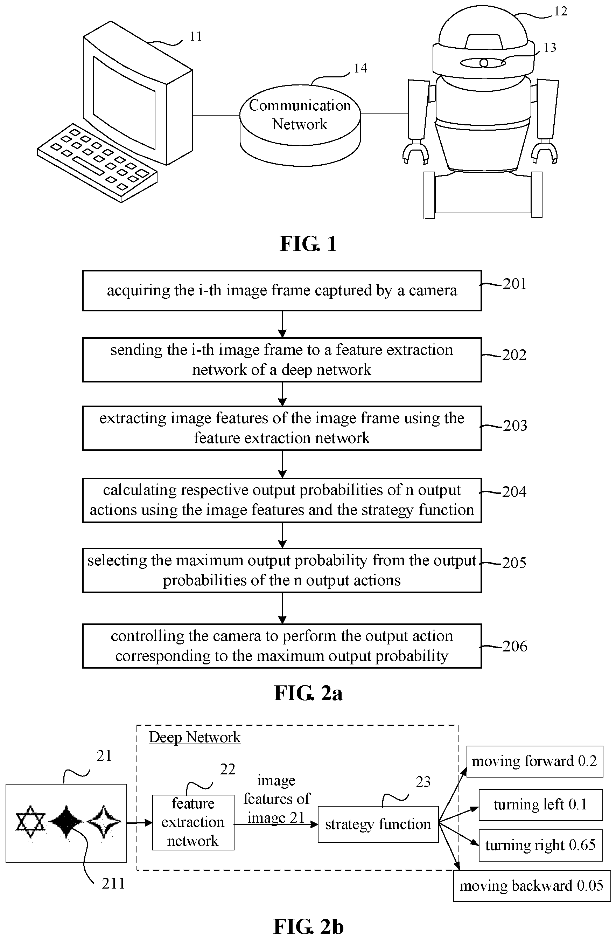

FIG. 1 is a schematic diagram of an application scenario of an active tracking method according to an embodiment of the present application. As shown in FIG. 1, the application scenario may include: a server 11, a terminal 12 and a communication network 14.

The server 11 may perform calculations using image frames and obtain output actions of the camera. In some examples, the server 11 may be connected with the terminal 12 via the communication network 13.

In an embodiment, the communication network 13 may be at least one of a local area network, a wide area network, a metropolitan area network.

The terminal 12 may include a camera 13. The terminal 12 may collect image frames using the camera 13 and control the camera 13 to perform output actions provided by the server 11. The output actions refer to actions executable by the camera, such as turning left, turning right, turning up, turning down, etc. In an embodiment, the terminal may be a robot equipped with a camera, an unmanned drone equipped with a camera, or an unmanned vehicle equipped with a camera, which is not limited herein. The unmanned drone equipped with the camera may be equipped with a camera arranged beneath the drone; and the unmanned vehicle equipped with the camera may be equipped with a camera at the front of the vehicle body. The following embodiment of the present application is illustrated using an example where the terminal 12 is a robot.

In an embodiment, the functions performed by the server in the above application scenario may be implemented by a module configured in a terminal, that is, an implementation environment may merely include the terminal 12 without the server.

FIG. 2a is a flow chart of an active tracking method according to an embodiment of the present application. Taking an application implementing the active tracking method running in the terminal 12 as shown in FIG. 1 as an example, as shown in FIG. 2a, the active tracking method may include the following steps.

In step 201, the terminal may acquire the i-th image frame captured by a camera.

In an embodiment, the terminal may include a camera. The terminal may acquire the i-th image frame captured by the camera. In an embodiment, the camera may capture images at a preset rate such as 24 fps (i.e., 24 frames per second), and the i-th image frame may include a moving object. The moving object is the object being tracked by the terminal implementing the active tracking method of the present application. The i is a natural number.

In an example as shown in FIG. 2b, the i-th frame captured by the camera and obtained by the terminal may be image frame 21, and the object being tracked is moving object 211.

In step 202, the terminal may send the i-th image frame to a feature extraction network of a deep network.

The deep network may calculate image features of input image frames, and calculate an output probability of each output action of the camera using the image features. Training of the deep network is carried out using sample image frames generated by a tracker tracking the moving object in a three-dimensional virtual environment.

In an embodiment, as shown in FIG. 2b, the deep network may include a feature extraction network and a strategy function, and the terminal may input the image frame 21 into the feature extraction network 22 of the deep network.

In step 203, the terminal may extract image features of the i-th image frame using the feature extraction network.

In an embodiment, the terminal may input the i-th image frame into the feature extraction network. The feature extraction network may perform feature extraction of an input image frame and obtain image features of the image frame. The deep network may include one or multiple feature extraction networks, which is not limited in the present application.

As an example, the deep network may include two feature extraction networks, i.e., a convolution neural network and an LSTM (Long Short-Term Memory) neural network. The image frame may be processed by the convolutional neural network and the LSTM neural network sequentially for feature extraction.

In the example as shown in FIG. 2b, after the image frame 21 is inputted into the feature extraction network 22, outputted image features of the image frame 21 may be obtained. The image features of the image frame 21 are inputted into the strategy function 23.

In step 204, the terminal may calculate respective output probabilities of n output actions using the image features and the strategy function.

The strategy function is for calculating the output probability of each output action of the camera using the image features extracted by the feature extraction network.

In an embodiment, after extracting the image features of the image frame, the feature extraction network may input the image features into the strategy function. The output actions are actions for controlling the camera. In an embodiment, n output actions are respectively corresponding to the n actions of the camera. n is a natural number, and $n \geq 2$. The sum of the output probabilities corresponding to the n output actions is 1.

In the example as shown in FIG. 2b, the output actions of the camera may be classified as moving forward, turning left, turning right and moving backward. After the image features of the image frame 21 are inputted into the strategy function, according to calculations of the strategy function 23, the output probability of moving forward may be 0.2, the output probability of turning left may be 0.1, the output probability of turning right may be 0.65, the output probability of moving backward may be 0.05. The sum of the output probabilities corresponding to the four output actions of the camera is 1.

In step 205, the terminal may select the maximum output probability from the output probabilities of the n output actions.

Taking the example described in step 204 as an example, the four output probabilities are 0.2, 0.1, 0.05, and 0.65, respectively, and the terminal may select the maximum output probability which is 0.65 from the four output probabilities.

In step 206, the camera may be controlled to perform the output action corresponding to the maximum output probability.

The terminal may control the camera to perform the output action corresponding to the maximum output probability according to the maximum output probability selected. The output action may enable the camera to keep track of the moving object.

In an embodiment, the above steps 201 to 206 may be repeated for the (i+1)-th image frame.

In view of the above, by using the deep network of the embodiment of the present application, the camera can be controlled to perform the action determined using the image frame acquired by the camera. When adjusting the parameters, only the parameters of the deep network may be adjusted to enable the deep network to accurately determine the action that should be performed by the camera, without performing joint adjustment of parameters of two independent modules, i.e., a moving object tracking module and a camera controlling module. As such, the workload of the parameter adjustment can be reduced, and the accuracy of object tracking can be improved.

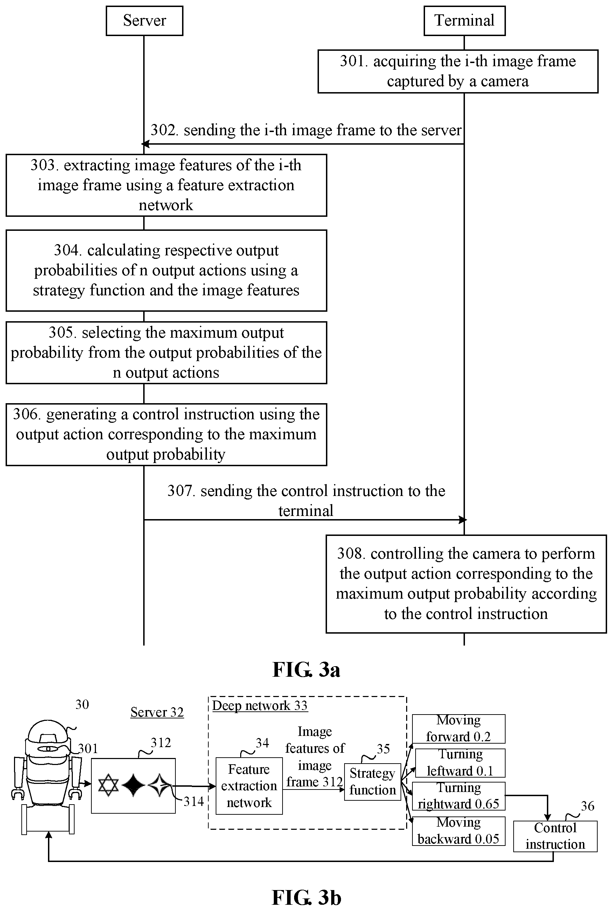

In an embodiment, the above-described active tracking method as shown in FIG. 2a may also be implemented by both the terminal and the server. Taking the active tracking method applied to the application scenario as shown in FIG. 1 as an example, the method may be as shown in FIG. 3a.

In step 301, a terminal may acquire the i-th image frame captured by a camera.

In an embodiment, the terminal may include a camera. The terminal may acquire the i-th image frame captured by the camera, and i is a natural number. In an embodiment, the camera captures images at a preset rate such as 24 fps (i.e., 24 frames per second), and the i-th image frame may include a moving object that is the object being tracked by the terminal performing the active tracking method of the present application.

In an example as shown in FIG. 3b, the terminal 30 may include a camera 301. The terminal 30 may acquire an image frame 312 captured by the camera, and the object being tracked is moving object 314.

In step 302, the terminal may send the i-th image frame to the server.

In an embodiment, the server may include a deep network for calculating image features of an input image frame and calculating an output probability of each output action of the camera using the image features. The deep network may include a feature extraction network and a strategy function. The deep network is a neural network previously trained using a three-dimensional virtual environment.

In an embodiment, the terminal may send the i-th image frame to the server which inputs the i-th image frame into the feature extraction network of the deep network.

In the example as shown in FIG. 3b, the terminal 30 may input the image frame 312 into the deep network 33 of the server 32. The deep network 33 includes the feature extraction network 34 and the strategy function 35. The server may input the image frame 312 into the feature extraction network 34 of the deep network 33.

In step 303, the server extracts image features of the i-th image frame using the feature extraction network.

In an embodiment, the terminal sends the i-th image frame to the server and inputs the i-th image frame into the deep network which includes the feature extraction network and the strategy function. The feature extraction network is for performing feature extraction on an input image frame and can obtain image features of the image frame. The deep network may include one or multiple feature extraction networks, which is not limited in embodiments of the present application.

The strategy function is for calculating the output probability of each output action of the camera using the image features extracted by the feature extraction network. In an embodiment, the feature extraction network sends the image features of the image frame to the strategy function after extracting the image features of the image frame.

In an example the feature extraction network includes two parts, i.e., a convolution neural network and an LSTM neural network. The image frame is processed sequentially through the convolutional neural network and the LSTM neural network for feature extraction.

As shown in FIG. 3b, after the image frame 312 is inputted into the feature extraction network, output are image features of the image frame 312 which are inputted into the strategy function 35.

In step 304, the server calculates respective output probabilities of n output actions using the image features and the strategy function.

The output actions are actions for controlling the camera. In an embodiment, n output actions are corresponding to the n actions of the camera, n≥2, and the sum of the output probabilities of the n output actions is 1.

In an example as shown in FIG. 3b, the output actions of the camera are classified as moving forward, turning left, turning right and moving backward. After the image features of the image frame 312 are inputted into the strategy function, it can be obtained through calculations using the strategy function that the output probability of moving forward is 0.2, the output probability of turning left is 0.1, the output probability of turning right is 0.65, the output probability of moving backward is 0.05, and the sum of the output probabilities of the four output actions of the camera is 1.

In step 305, the server selects the maximum output probability from the n output probabilities.

In the example described in step 304, the four output probabilities are 0.2, 0.1, 0.05, and 0.65, respectively, and the server selects the maximum output probability, i.e., 0.65, from the four output probabilities.

In step 306, the server generates a control instruction using the output action corresponding to the maximum output probability.

The control instruction is an instruction for controlling the camera to perform the output action. In an embodiment, the output action corresponding to the maximum output probability is an action to be performed by the camera to keep track of the moving object.

In the example as shown in FIG. 3b, the maximum output probability calculated by the strategy function 35 is 0.65, and is corresponding to the output action of turning right, based on which the server generates the control instruction 36.

In step 307, the server sends the control instruction to the terminal.

In an embodiment, the control instruction includes the output action corresponding to the maximum output probability.

In step 308, the terminal controls the camera to perform the output action corresponding to the maximum output probability according to the control instruction.

The terminal controls the camera to execute the output action corresponding to the maximum output probability included in the control instruction according to the received control instruction. The output action is for enabling the camera to keep track of the moving object.

In an example as shown in FIG. 3b, the terminal 30 receives the control instruction 36 sent by the server 32, which is generated using the output action "turning right". The terminal 30 performs the output action in the control instruction according to the control instruction, i.e., controls the camera to turn right.

In an embodiment, for the (i+1)-th image frame, the above steps 301 to 308 may be repeated.

In view of the foregoing, the image frames are inputted into the feature extraction network for image feature extraction, and the extracted image features are inputted into the strategy function. Then the output action corresponding to the maximum output probability of the camera is calculated, and the camera is directly controlled to perform the action. As such, the scheme can avoid the difficulty in parameter adjustment resulted from setting up two independent running modules, i.e., the camera controlling module and the object tracking module, and also avoid the difficulty in joint adjustment of the camera controlling module and the object tracking module which is the cause of low active tracking accuracy. According to the active tracking method provided by embodiments of the present application, the active tracking merely requires calculating the output probabilities of output actions of the camera and controlling the camera to perform the output action corresponding to the maximum output probability, thereby the workload and difficulty of parameter adjustment can be reduced and the accuracy of the active tracking can be increased.

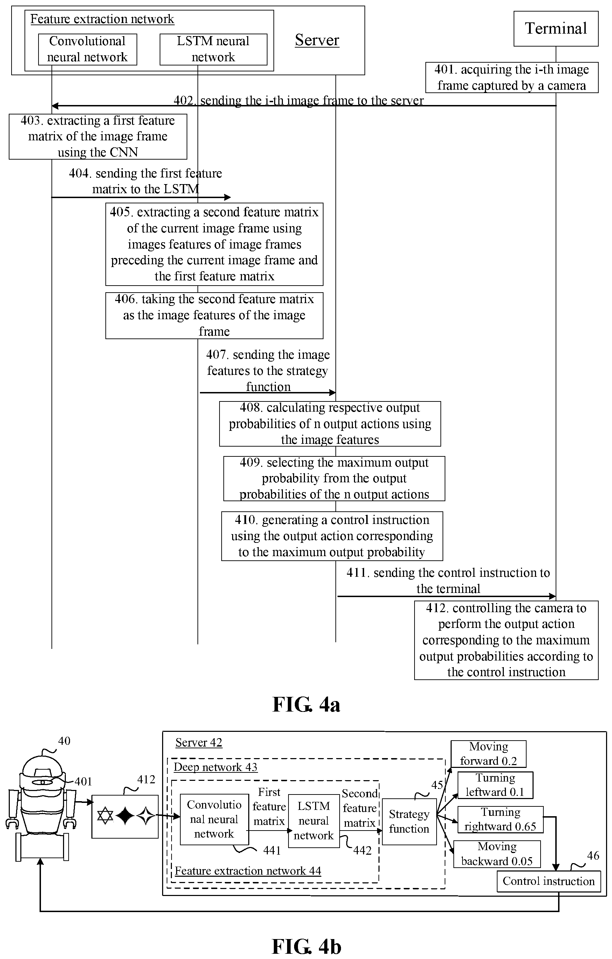

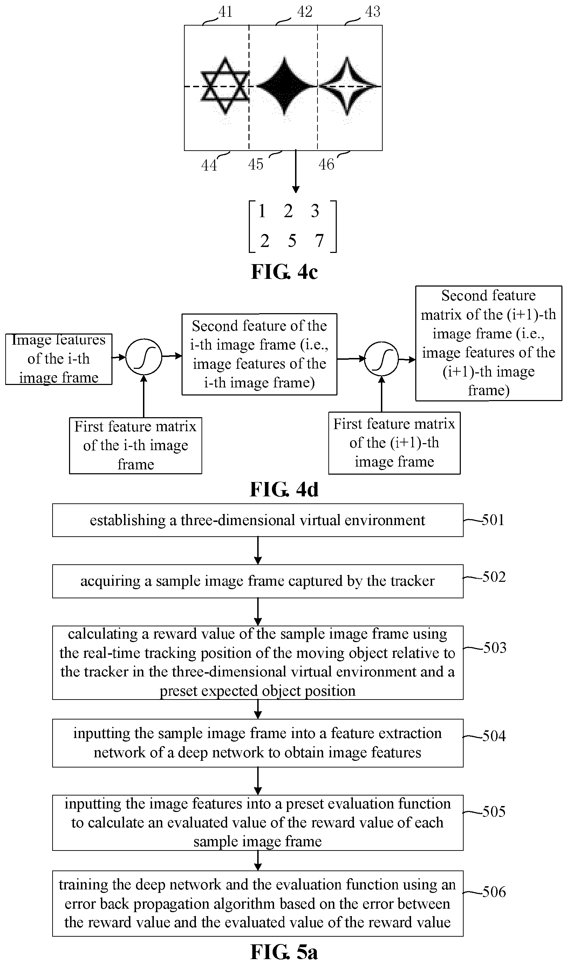

In the above embodiments, the features of the input image frame are extracted by the feature extraction network. In an embodiment, the feature extraction network of the deep network includes a convolutional neural network and an LSTM neural network. The image frames are first inputted into the convolutional neural network for feature extraction and then inputted into the LSTM neural network for feature extraction. The flow chart of the active tracking method is as shown in FIG. 4.

In step 401, the terminal acquires the i-th image frame captured by the camera.

In an embodiment, the terminal includes the camera. The terminal acquires the i-th image frame captured by the camera, and the i-th image frame includes a moving object that is the object being tracked by the terminal using the active tracking method of the present application.

In the example as shown in FIG. 4b, the terminal 40 includes a camera 401, and acquires an image frame 412 captured by the camera 401, and the tracked object is moving object 414.

In step 402, the terminal sends the i-th image frame to the server.

The server includes a deep network for calculating image features of input image frames and calculating the output probability of each output action of the camera using the image features. The deep network is a neural network pre-trained using a three-dimensional virtual environment.

In an embodiment, the deep network includes a feature extraction network and a strategy function. The feature extraction network includes a convolutional neural network and an LSTM neural network. The convolutional neural network is a feedforward neural network for image processing, and the LSTM neural network is a neural network for calculating image features of a current frame image based on the current frame image and image features of a previous frame image.

In an embodiment, after the terminal sends the i-th image frame to the server, the server inputs the image frame into the convolutional neural network.

In the example as shown in Fig. 4b, the terminal 40 inputs the image frame 412 into the deep network 43 of the server 42. The deep network includes the feature extraction network 44 and the strategy function 35. The feature extraction network 44 includes a convolutional neural network 441 and an LSTM neural network 442. The server inputs the image frame 312 into the convolutional neural network 441 of the deep network 43.

In step 403, the server extracts a first feature matrix of the i-th image frame using the convolutional neural network.

In an embodiment, the convolutional neural network forward propagates the i-th image frame to extract the first feature matrix of the i-th image frame through the forward propagation.

FIG. 4c is an example of the convolutional neural network forward propagating the image frame 412 of FIG. 4b and extracting the first feature matrix. As shown in FIG. 4c, after the image frame is inputted into the convolutional neural network, the convolutional neural network forward propagates the image frame in the order of the image block 41, the image block 42, the image block 43, the image block 44, the image block 45 and the image block 46, and obtains the first feature matrix $\begin{bmatrix} 1 & 2 & 3 \\ 2 & 5 & 7 \end{bmatrix}$.

In step 404, the server sends the first feature matrix to the LSTM neural network.

In the example as shown in FIG. 4b, the feature extraction network 44 also includes an LSTM neural network 442 for calculating image features of the current frame image based on the current frame image and image features of a previous frame image. After obtaining the first feature matrix of the image frame 412 through forward propagation of the image frame 412, the convolutional neural network sends the first feature matrix to the LSTM neural network.

In step 405, the server extracts a second feature matrix of the current image frame based on the first feature matrix and image features of previous image frames of the current image frame using the LSTM neural network.

In an embodiment, the LSTM neural network may extract a second feature matrix of the i-th image frame based on the first feature matrix and image features of the image frame immediately preceding the i-th image frame. In another embodiment, the LSTM neural network may extract the second feature matrix of the current image frame based on the first feature matrix and image features of a certain image frame preceding the i-th image frame. In another embodiment, the LSTM neural network may extract the second feature matrix of the current image frame based on the first feature matrix and image features of multiple image frames preceding the i-th image frame, which is not limited in the present application.

In an example as shown in FIG. 4d where the LSTM neural network extracts the second feature matrix of the current image frame based on the first feature matrix and the image features of the image frame immediately preceding the i-th image frame, after the first feature matrix of the i-th image frame and image features of the (i-1)-th image frame are inputted into the LSTM neural network, the second feature matrix of the i-th frame image is extracted by the LSTM neural network. In an embodiment, the second feature matrix is an image feature of the i-th image frame, and the image feature of the i-th image frame and a first feature matrix of the (i+1)-th image frame may be inputted into the LSTM neural network to extract a second feature matrix of the (i+1)-th image frame (i.e., an image feature of the (i+1)-th image frame).

In step 406, the server takes the second feature matrix as the image feature of the i-th image frame.

In step 407, the server sends the image feature to the strategy function.

In the example as shown in FIG. 4b, the deep network 43 includes the strategy function 45. The LSTM neural network extracts the second feature matrix of the image frame and inputs the second feature matrix into the strategy function 45 as the image feature of the image frame.

In step 408, the server calculates respective output probabilities of the n output actions using the image features and the strategy function.

The output actions are actions for controlling the cameras. In an embodiment, the n output actions are corresponding to n actions of the camera, n≥2, and the sum of the output probabilities of the n output actions is 1.

In the example as shown in FIG. 4b, the output actions of the camera are classified as moving forward, turning left, turning right and moving backward. After the image features of the image frame 312 are inputted into the strategy function, it can be obtained through calculations of the strategy function that the output probability of moving forward is 0.2, the output probability of turning left is 0.1, the output probability of turning right is 0.65, the output probability of moving backward is 0.05, and the sum of the output probabilities of the four output actions of the camera is 1.

In step 409, the server selects the maximum output probability from the output probabilities of the n output actions.

In the example of step 408, the four output probabilities are 0.2, 0.1, 0.05 and 0.65, respectively, and the server selects the maximum output probability, i.e., 0.65, from the four output probabilities.

In step 410, the server generates a control instruction using the output action corresponding to the maximum output probability.

The control instruction is an instruction for controlling the camera to perform the output action. In an embodiment, the output action corresponding to the maximum output probability is an action to be performed by the camera to keep track of the moving object.

In the example as shown in FIG. 4b, the maximum output probability calculated by the strategy function 45 is 0.65, the output action corresponding to the maximum output probability is turning right, and the server generates the control instruction 46 using the output action.

In step 411, the server sends the control instruction to the terminal.

In an embodiment, the control instruction includes the output action corresponding to the maximum output probability.

In step 412, the terminal controls the camera to perform the output action corresponding to the maximum output probability based on the control instruction.

According to the received control instruction, the terminal controls the camera to perform the output action corresponding to the maximum output probability included in the control instruction. The output action is for enabling the camera to keep track of the moving object.

In the example as shown in FIG. 4b, the terminal 40 receives a control instruction 46 sent by the server 42. The control instruction 46 is generated using the output action "turning right", and the terminal 40 performs the output action in the control instruction according to the control instruction, i.e., controls the camera to turn right.

In an embodiment, the above steps 401 to 412 may be repeated for the (i+1)-th image frame.

In view of the foregoing, parameters in the deep network are trained in advance using a three-dimensional virtual environment, so that the deep network can determine the actions to be performed by the camera according to the image frames of the camera. During parameter adjustment, merely the parameters of the deep network need to be trained, and there is no need to perform joint parameter adjustment of two independent running modules, i.e., the moving object tracking module and the camera controlling module. Therefore, the workload of the parameter adjustment can be reduced. Secondly, the image features of the current image frame are extracted by the LSTM neural network using the first feature matrix of the current frame and the image features of the image frame preceding the current frame, the image feature extraction takes the relevance between successive image frames as one of considered factors, thus the accuracy of image feature extraction of the current image frame can be improved.

In an embodiment, prior to implementing the active tracking method described above, the deep network may be trained in advance. Taking the training process at a training terminal configured for training the deep network as an example, the training process is shown in FIG. 5a.

In step 501, the training terminal establishes a three-dimensional virtual environment.

The three-dimensional virtual environment is a virtual environment for training the deep network. The three-dimensional virtual environment includes a tracker and a moving object. The tracker is for tracking the moving object in the three-dimensional virtual environment and acquiring an image frame including the moving object from a first-person view when tracking the moving object. The moving object is for moving along a preset path in the three-dimensional virtual environment.

In an embodiment, the three-dimensional virtual environment may be a ViZDoom virtual environment. A plurality of three-dimensional virtual environments may be set up in order to avoid over-fitting training results, i.e., to avoid that the tracker performs tracking in one direction more frequently than in the other directions. The three-dimensional virtual environments are different from one another with different preset paths. Each preset path and its reversed path may be used in the training for one or multiple times.

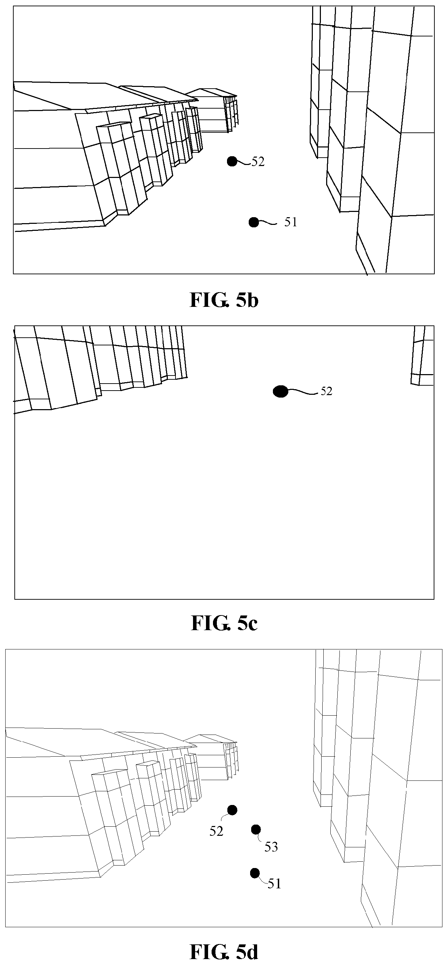

The example as shown in FIG. 5b is an illustrative three-dimensional virtual environment. According to FIG. 5b, the three-dimensional virtual environment includes a tracker 51 and a moving object 52. The moving object 52 moves along a preset path, and the tracker 51 is for tracking the moving object 52 in the three-dimensional virtual environment.

In an example, a total of 21 three-dimensional virtual environments are provided, each provides one preset path. Each preset path and its reversed path are respectively used once in the training.

In step 502, the training terminal acquires a sample image frame acquired by the tracker.

In an embodiment, the sample image frame is an image frame acquired from a first-person view by the tracker while tracking the moving object in the three-dimensional virtual environment.

FIG. 5c illustrates the i-th sample image frame acquired by the tracker 51. As shown in FIG. 5c, the i-th sample image frame is an image frame including the moving object acquired from a first-person view by the tracker 51 while tracking the moving object 52.

In step 503, the training terminal calculates a reward value of the sample image frame using the real-time tracking position of the moving object relative to the tracker in the three-dimensional virtual environment and a preset expected object position.

The reward value represents the matching degree of the real-time tracking position and the expected object position. The real-time tracking position refers to a position of the moving object relative to the tracker at the moment the sample image frame is acquired. The expected object position refers to a preset position of the moving object relative to the tracker under a desired condition.

In an example as shown in FIG. 5d, the three-dimensional virtual environment includes a tracker 51, a moving object 52 and a preset expected object position 53. The position of the moving object 52 is the real-time tracking position, and a reward value corresponding to the sample image frame is calculated using the real-time tracking position and the preset expected object position 53.

In step 504, the training terminal inputs the sample image frame into the feature extraction network of the deep network to obtain image features.

In an embodiment, the deep network includes the feature extraction network. The feature extraction network is for performing feature extraction on input sample image frames to obtain image features of the sample image frames. The deep network may include one or multiple feature extraction networks, which is not limited in embodiments of the present application.

In an example, the deep network includes two feature extraction networks, i.e., a convolutional neural network and an LSTM neural network. The feature extraction of the image frame is performed sequentially by the convolutional neural network and the LSTM neural network.

In step 505, the training terminal inputs the image features into a preset evaluation function to calculate an evaluated value of the reward value of the sample image frame.

The evaluated value of the reward value represents the matching degree between the predicted tracking position predicted by the evaluation function and the expected object position.

The evaluation function is a function for predicting the matching degree between the predicted tracking position and the expected object position.

The predicted tracking position refers to the position of the moving object relative to the tracker predicted at the moment the sample image frame is acquired, and is obtained through calculation by the evaluation function. The expected object position refers to the position of the moving object relative to the tracker under a desired condition.

In step 506, the training terminal trains the deep network and the evaluation function using an error back propagation algorithm based on the error between the reward value and the evaluated value of the reward value.

In an embodiment, the deep network includes: a feature extraction network and a strategy function. The training of the deep network and the evaluation function using the error back propagation algorithm includes updating parameters of the strategy function and the parameters of the evaluation function using the error back propagation algorithm.

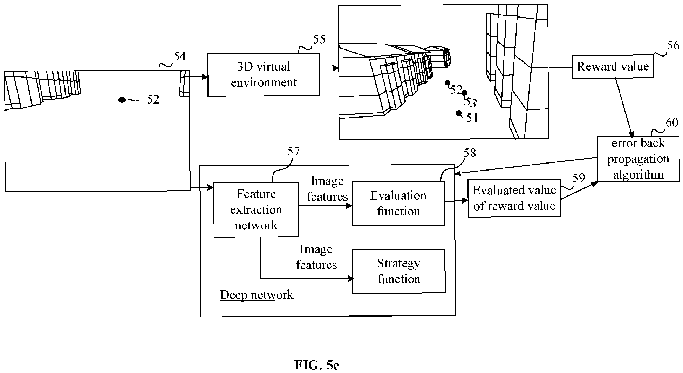

FIG. 5e is a schematic diagram illustrating a training process. As shown in the diagram:

firstly, a sample image frame 54 collected by a tracker is acquired, the sample image frame 54 is an image frame collected by the tracker in a first-person view when tracking a moving object 52 in a three-dimensional virtual environment 55;

then, a training terminal calculates a reward value 56 for the sample image frame using a real-time tracking position 52 of the moving object relative to the tracker in the three-dimensional virtual environment 55 and a preset expected object position 53;

after that, the training terminal inputs the sample image frame into a feature extraction network 57 of a deep network to obtain image features. The training terminal inputs the image features into a preset evaluation function 58 to calculate an evaluated value 59 of the reward value of each sample image frame. The training terminal trains the deep network and the evaluation function using an error back propagation algorithm 60 based on the error between the reward value 56 and the evaluated value 59 of the reward value.

According to the above, since the three-dimensional virtual environment is a vivid restoration of, and thus is similar to, the actual environment in practice, training in the three-dimensional virtual environment makes it unnecessary to perform training using a real object in a real scene, thus improves the training efficiency, feasibility and accuracy. The evaluation function is used to predict the predicted tracking position, the reward value and the evaluated value of the reward value are calculated using the predicted tracking position and the expected object position, and then the parameters of the strategy function and the parameters of the evaluation function are updated, thus the training efficiency and the training accuracy of the deep network are improved and the problem that it is difficult to directly train the strategy function is solved.

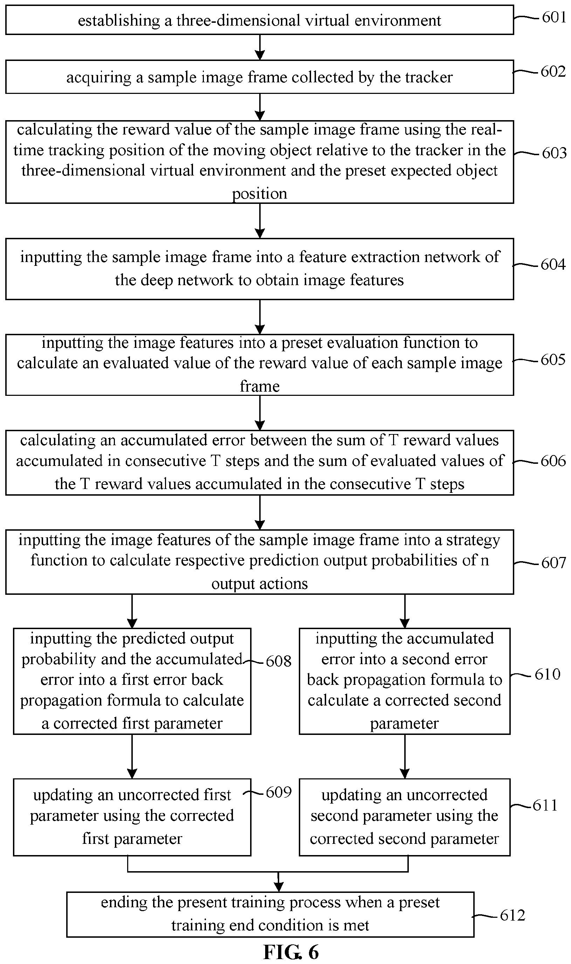

In an optional embodiment, the method of training the deep network and the evaluation function using the error back propagation algorithm in the above embodiments is, for example, updating the parameters of the strategy function and the parameters of the evaluation function using the error back propagation algorithm, as shown in FIG. 6.

At step 601, the training terminal establishes a three-dimensional virtual environment.

The three-dimensional virtual environment is a virtual environment for training the deep network. The three-dimensional virtual environment includes a tracker and a moving object. The tracker is for tracking the moving object in the three-dimensional virtual environment, and capturing an image frame including the moving object in a first-person view while tracking the moving object. The moving object moves along a preset path in the three-dimensional virtual environment.

In an embodiment, the three-dimensional virtual environment may be a ViZDoom virtual environment. A plurality of different three-dimensional virtual environments with different preset paths may be set up to avoid over-fitting training results, i.e. to avoid the tracker performs tracking in one direction more frequently than in the other directions. In an example, each preset path and its reversed path may be used in training for one or multiple times respectively.

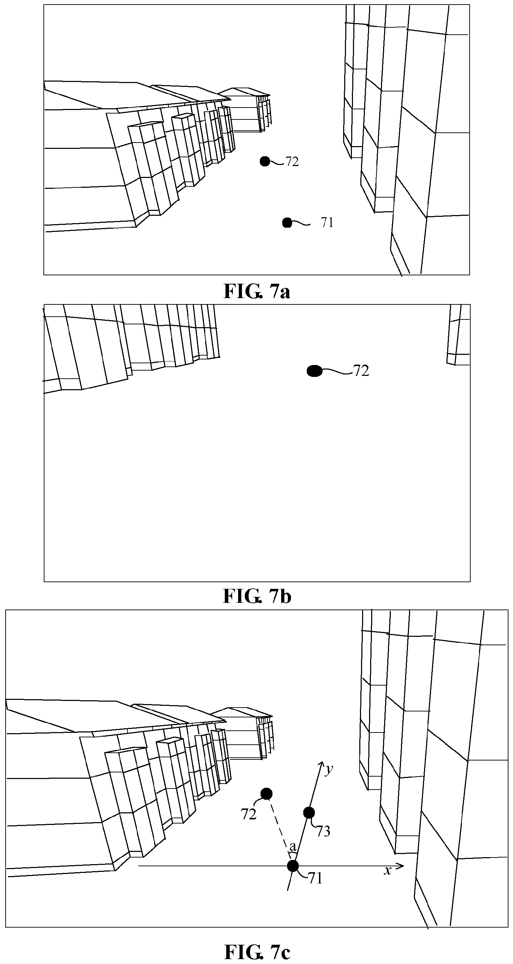

FIG. 7a illustrates an exemplary three-dimensional virtual environment. As shown in FIG. 7a, the three-dimensional virtual environment includes a tracker 71 and a moving object 72. The moving object 72 moves along a preset path, and the tracker 71 is for tracking the moving object 72 in the three-dimensional virtual environment.

At step 602, the training terminal acquires a sample image frame collected by the tracker.

In an embodiment, the sample image frame collected by the tracker is an image frame collected by the tracker in a first-person view while tracking a moving object.

Referring to FIG. 7b, FIG. 7b is an exemplary i-th sample image frame collected by the tracker 71, i.e., an image frame collected by the tracker 71 in a first-person view while tracking the moving object 72, as shown in FIG. 7b.

At step 603, the training terminal calculates the reward value of the sample image frame using the real-time tracking position of the moving object relative to the tracker in the three-dimensional virtual environment and the preset expected object position.

The reward value represents the matching degree between the real-time tracking position and the expected object position. The real-time tracking position refers to the position of the moving object relative to the tracker at the moment the sample image frame is captured. The expected object position refers to a preset position of the moving object relative to the tracker under a desired condition.

In an embodiment, the formula for calculating the reward value is as follows:

$$r = A - \left( \frac{\sqrt{x^2 + (y - d)^2}}{c} + \lambda |a| \right)$$

A Cartesian coordinate system is established with the origin being the position of the tracker, the positive direction of the y axis being the direction in which the tracker is looking in the three-dimensional virtual environment, with the positive direction of the x axis being a horizontal right-hand side direction of the tracker in the three-dimensional virtual environment. A is the maximum value of the reward value, r is the reward value corresponding to the sample image frame, d is a preset offset, c is a preset normalization parameter, $\lambda$ is a preset weight factor, and a is an angle between a line connecting the moving object and the tracker and the positive direction of the y axis.

In an example as shown in FIG. 7c, the three-dimensional virtual environment includes a tracker 71, a moving object 72 and a preset expected object position 73 which is located at a position directly in front of the tracker 71 with a distance of d. Cartesian coordinate system is established with the origin being the position of the tracker 71, the positive direction of the y axis being the direction in which the tracker 71 is looking in the three-dimensional virtual environment, with the positive direction of the x axis being a horizontal right-hand side direction of the tracker 71 in the three-dimensional virtual environment, i.e. the coordinate of the expected object position 73 is (0, d).

In the above formula, A is the maximum value of the reward value, r is the reward value corresponding to the sample image frame, d is a preset offset, c is a preset normalization parameter, $\lambda$ is a preset weight factor, a is an angle between the line connecting the moving object 72 and the tracker 71 and the positive direction of the y axis. A, d, c and $\lambda$ are greater than 0. As can be seen from FIG. 7c, when the moving object 72 is at the expected object position 73, the reward value can reach the maximum value A.

At step 604, the training terminal inputs the sample image frame into a feature extraction network of the deep network to obtain image features.

In an embodiment, the deep network includes the feature extraction network. The feature extraction network is for performing feature extraction on the input sample image frame and can obtain image features of the sample image frame. The deep network may include one or multiple feature extraction networks, which is not limited in the embodiments of the present application.

In an example, the deep network may include two feature extraction networks, e.g., a convolutional neural network and an LSTM neural network. The image frame may be processed through the convolutional neural network and the LSTM neural network respectively for feature extraction.

At step 605, the training terminal inputs the image features into a preset evaluation function to calculate an evaluated value of the reward value of the sample image frame.

The evaluated value of the reward value represents the matching degree between the predicted tracking position predicted by the evaluation function and the expected object position. The predicted tracking position refers to a position of the moving object relative to the tracker predicted at the moment the sample image frame is collected, and is obtained through calculations of the evaluation function. The expected object position refers to a preset position of the moving object relative to the tracker under a desired condition.

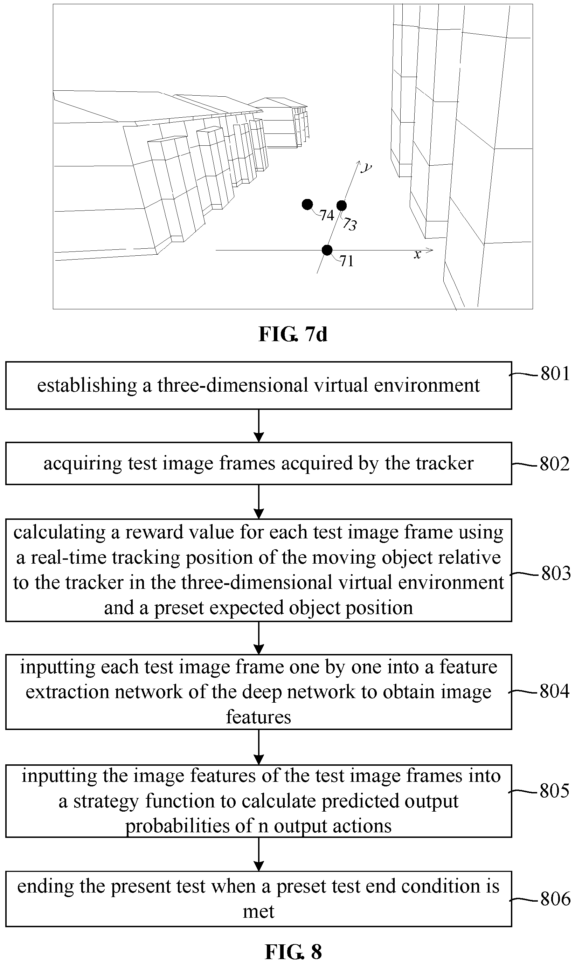

In an example, referring to FIG. 7d, after the image features of the sample image frame are inputted into the evaluation function, a predicted tracking position 74 is obtained through calculation, and an evaluated value of the reward value corresponding to the sample image frame is obtained by calculation using the predicted tracking position 74 and the expected object position 73.

In an embodiment, the above-described calculating the evaluated value of the reward value corresponding to the sample image frame using the predicted tracking position 74 and the expected object position 73 includes:

in an environment coordinate system having a fixed x axis and a fixed y axis established with a certain fixed point as the origin in the three-dimensional virtual environment, and the evaluated value of the reward value corresponding to the sample image frame is obtained through calculation using the predicted tracking position and the expected object position in the environment coordinate system.

At step 606, the training terminal calculates an accumulated error between the sum of T reward values accumulated in consecutive T steps and the sum of evaluated values of the T reward values accumulated in the consecutive T steps.

In an embodiment, T is a preset threshold, and each time an image frame is inputted into the deep network is counted as one step.

In an example, T may be set as 30, after 30 image frames have been accumulatively inputted into the deep network, the sum of 30 reward values accumulated through the inputted 30 image frames is calculated, the sum of evaluated values of the 30 reward values accumulated through the inputted 30 image frames are calculated, and then the difference between the sum of the reward values and the sum of the evaluated values of the reward values is calculated as the accumulated error.

In an embodiment, the sum of the T reward values accumulated in the consecutive T steps, and the sum of the evaluated values of the T reward values accumulated in the consecutive T steps may be accumulated with attenuations. In an example, when T is 5, 100% of the reward value of step 1 is added to the sum of the reward values, 90% of the reward value of step 2 is added to the sum of the reward values, 70% of the reward value of step 3 is added to the sum of the reward values, 50% of the reward value of step 4 is added to the sum of the reward values, and 30% of the reward value of step 5 is added to the sum of the reward values; 100% of the evaluated value of the reward value of step 1 is added to the sum of the evaluated values of the reward values, 90% of the evaluated value of the reward value of step 2 is added to the sum of the evaluated values of the reward values, 70% of the evaluated value of the reward value of step 3 is added to the sum of the evaluated values of the reward values, 50% of the evaluated value of the reward value of step 4 is added to the sum of the evaluated values of the reward values, and 30% of the evaluated value of the reward value of step 5 is added to the sum of the evaluated values of the reward values.

At step 607, the training terminal inputs the image features of the sample image frame into a strategy function to calculate respective prediction output probabilities of n output actions.

The above-mentioned output actions refer to actions for controlling the tracker. In an embodiment, the n output actions are corresponding to n actions of the tracker, $n \geq 2$. The sum of the predicted output probabilities corresponding to the n output actions is 1.

In an example, the output actions of the tracker include moving forward, turning left, turning right and attacking a moving object. According to calculations of the strategy function, the predicted output probability of moving forward is 0.2, the predicted output probability of turning left is 0.1, the predicted output probability of turning right is 0.65, the predicted output probability of attacking the moving object is 0.05, and the sum of the predicted output probabilities corresponding to the four output actions of the tracker is 1.

At step 608, the training terminal inputs the predicted output probability and the accumulated error into a first error back propagation formula to calculate a corrected first parameter.

The strategy function includes at least one first parameter which is obtained from training using the first error back propagation formula. In an example, the first error back propagation formula is as follows:

$$\theta = \theta^{'} + \alpha\big(R_t - V(S_t)\big)\nabla_{\theta}\log \pi\big(a_t\big|S_t\big) + \beta\nabla_{\theta}H(\pi(\bullet|S_t))$$

In the formula, $\theta'$ is a first parameter before correction, $\alpha$ is a learning rate, $R_t - V(S_t)$ is the accumulated error, $R_t$ is the sum of T reward values accumulated in consecutive T steps, $V(S_t)$ is the sum of the evaluated values of the T reward values accumulated in the consecutive T steps, $\log \pi(a_t|S_t)$ is a predicted output probability, H is an entropy regular term, and $\beta$ is a regularization factor.

At step 609, the training terminal updates an uncorrected first parameter using the corrected first parameter.

In an embodiment, the uncorrected first parameter is replaced with the corrected first parameter.

At step 610, the training terminal inputs the accumulated error into a second error back propagation formula to calculate a corrected second parameter.

The evaluation function includes at least one second parameter which is obtained from training using the second error back propagation formula. In an example, the second error back propagation formula is as follows:

$$\varphi = \varphi' - \alpha \nabla_{\theta} \frac{1}{2} (R_t - V(S_t))^2$$

wherein $\varphi'$ is an uncorrected second parameter, $R_t - V(S_t)$ is an accumulated error, $R_t$ is the sum of T reward values accumulated in consecutive T steps, $V(S_t)$ is the sum of the evaluated values of the T reward values accumulated in the consecutive T steps, and $\alpha$ is a learning rate.

At step 611, the training terminal updates an uncorrected second parameter using the corrected second parameter.

In an embodiment, the training terminal replaces the uncorrected second parameter with the corrected second parameter.

At step 612, the training terminal ends the present training process when a preset training end condition is met.

In an embodiment, the preset training end condition includes, but not limited to, the following conditions.

First, the number of sample image frames inputted to the deep network reaches a first preset threshold. In an example, the first preset threshold is 200. When the number of the input sample image frames received by the deep network reaches 200, the present training process is ended.

Second, the sum of m reward values accumulated in consecutive m steps reaches a second preset threshold, m is a positive integer. In an example, the second preset threshold value is -500. When the sum of the m reward values accumulated in the consecutive m steps reaches -500, the present training process is ended. m should be smaller than the first preset threshold in the first preset training condition.

It should be noted that, in the training process of the deep network, the training terminal may simultaneously train the deep network using a plurality of threads. At an initial moment of training the deep network, the multiple threads use an initial value of the first parameter and an initial value of the second parameter and asynchronously update the first parameter and the second parameter during the training. Asynchronous updating means that updates of the first parameter performed by any two threads do not affect each other, and/or updates of the second parameter performed by any two threads do not affect each other.

In the above embodiment, step 606 is executed before step 607. In practice, step 607 may be executed before step 606, and the order of performing the two steps is not limited in the present application.

In view of the above, since the three-dimensional virtual environment is a vivid restoration of, and thus is similar to, the actual environment in practice, training in the three-dimensional virtual environment makes it unnecessary to perform training using a real object in a real scene, thus improves the training efficiency and accuracy. The evaluation function is used to predict the predicted tracking position, the reward value and the evaluated value of the reward value are calculated using the predicted tracking position and the expected object position, and then the parameters of the strategy function and the parameters of the evaluation function are updated using the reward value and the evaluated value of the reward value, thus the training efficiency and the training accuracy of the deep network are improved.

In an embodiment, after the training is completed, the trained deep network can be further tested. FIG. 8 illustrates a test process performed by a test terminal as an example.

At step 801, a test terminal establishes a three-dimensional virtual environment.

The three-dimensional virtual environment is a virtual environment for testing the trained deep network. The three-dimensional virtual environment includes a tracker and a moving object. The tracker is for tracking the moving object in the three-dimensional virtual environment, and acquiring image frames including the moving object from a first-person view while tracking the moving object. The moving object is for moving along a preset path in the three-dimensional virtual environment.

At step 802, the test terminal acquires test image frames acquired by the tracker.

In an embodiment, the test image frames acquired by the tracker are image frames including the moving object acquired by the tracker from a first-person view while tracking the moving object.

At step 803, the test terminal calculates a reward value for each test image frame using a real-time tracking position of the moving object relative to the tracker in the three-dimensional virtual environment and a preset expected object position.

The reward value represents the matching degree between the real-time tracking position and the expected object position. The real-time tracking position refers to a position of the moving object relative to the tracker at the moment the test image frame is captured. The expected object position refers to a preset position of the moving object relative to the tracker under a desired condition.

At step 804, the test terminal inputs each test image frame one by one into a feature extraction network of the deep network to obtain image features.

At step 805, the test terminal inputs the image features of the test image frames into a strategy function to calculate predicted output probabilities of n output actions.

The above output actions refer to actions for controlling the tracker. In an embodiment, the n output actions are corresponding to n actions of the tracker, and n ≥2. The sum of the predicted output probabilities corresponding to the n output actions is 1.

In an example, the output actions of the tracker include moving forward, turning left, turning right and attacking a moving object. Through calculations of the strategy function, the predicted output probability of moving forward is 0.2, the predicted output probability of turning left is 0.1, the predicted output probability of turning right is 0.65, and the predicted output probability of attacking the moving object is 0.05. The sum of the predicted output probabilities corresponding to the four output actions of the tracker is 1.

At step 806, the test terminal ends the present test when a preset test end condition is met.

In an embodiment, the preset test end condition includes, but not limited to, the following conditions.

First, the number of test image frames inputted into the deep network reaches a first preset threshold. In an example the first preset threshold is 200. When the number of the input test image frames received by the deep network reaches 200, the test is ended.

Second, the sum of m reward values accumulated in consecutive m steps reaches a second preset threshold, m is a positive integer. In an example, the second preset threshold value is -500. When the sum of the m reward values accumulated in the consecutive m steps reaches -500, the test is ended. m should be less than the first preset threshold in the first preset test condition.

In view of the above, by testing the trained deep network, the test result and the training effects can be directly shown. Thus the test process can be ended when the training target is reached or the error is large, and the training process can thus be improved. A deep network with better performance can be obtained through a further optimized training process.

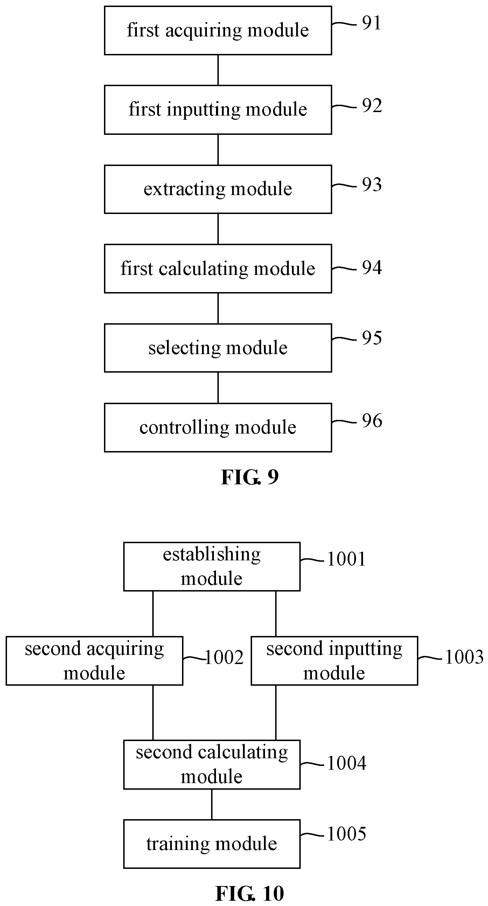

FIG. 9 is a block diagram of the structure of an active tracking device according to an embodiment of the present application.

As shown in FIG. 9, the active tracking device includes: a first acquiring module 91, a first inputting module 92, an extracting module 93, a first calculating module 94, a selecting module 95 and a controlling module 96.

The first acquiring module 91 is for acquiring the i-th image frame captured by a camera. The i-th image frame includes a moving object.

The first inputting module 92 is for inputting the i-th image frame into a deep network which includes a feature extraction network and a strategy function. The deep network is a neural network trained using a three-dimensional virtual environment in advance.

The extracting module 93 is for extracting image features of the i-th image frame using the feature extraction network.

The first calculating module 94 is for calculating respective output probabilities of n output actions using the image features and the strategy function. The output actions are actions for controlling the camera, and n≥2.

The selecting module 95 is for selecting the maximum output probability from the output probabilities of the n output actions.

The controlling module 96 is for controlling the camera to perform the output action corresponding to the maximum output probability so as to track the moving object.

In an embodiment, the extracting module 93 is further for extracting a first feature matrix of the image frame using a convolutional neural network.

The extracting module 93 is further for extracting a second feature matrix of the image frame using an LSTM neural network based on the first feature matrix of the image frame and the image features of other image frames preceding the image frame, and taking the second feature matrix as the image features of the image frame.

According to the above, parameters in the deep network are trained in advance using the three-dimensional virtual environment, so that the deep network can determine the actions to be performed by the camera using the image frames obtained by the camera. During parameter adjustment, only the parameters of the deep network are to be trained, and joint adjustment of parameters of two independent running modules, e.g., the moving object tracking module and the camera controlling module is not to be carried out respectively. Thus, the workload of the parameter adjustment is reduced. In addition, the image features of the current image frame are extracted based on the first feature matrix of the current frame and the image features of the image frame preceding the current frame using the LSTM neural network, the relevance between the successive image frames is used as a reference factor for image feature extraction, which further improves the accuracy of extracting the image features of the current image frame.

FIG. 10 is a block diagram of the structure of a deep network training device according to an embodiment of the present application.

As shown in FIG. 10, the deep network training device includes: an establishing module 1001, a second acquiring module 1002, a second inputting module 1003, a second calculating module 1004 and a training module 1005.

The establishing module 1001 is for establishing a three-dimensional virtual environment which includes a tracker and a moving object. The tracker is for tracking the moving object in the three-dimensional virtual environment, and acquiring an image frame including the moving object from a first-person view when tracking the moving object. The moving object is for moving along a preset path in the three-dimensional virtual environment.

The second acquiring module 1002 is for acquiring a sample image frame acquired by the tracker.

The second calculating module 1004 is for calculating a reward value corresponding to the sample image frame using a real-time tracking position of the moving object relative to the tracker in the three-dimensional virtual environment and a preset expected object position. The reward value represents the matching degree between the real-time tracking position and the expected object position.

The second inputting module 1003 is for inputting the sample image frame into the feature extraction network of the deep network to obtain the image features.

The second calculating module 1004 is further for inputting the image features into a preset evaluation function to calculate an evaluated value of the reward value corresponding to the sample image frame. The evaluated value of the reward value represents the matching degree between a predicted tracking position predicted by the evaluation function and the expected object position.

The training module 1005 is for training the deep network and the evaluation function using an error back propagation algorithm based on an error between the reward value and the evaluated value of the reward value.

In an embodiment, the training module 1005 includes an input unit, for inputting the image features of the sample image frame into the strategy function of the deep network to calculate respective predicted output probabilities of n output actions.

The input unit is further for inputting the predicted output probability and the accumulated error into a first error back propagation formula to calculate a corrected first parameter for each first parameter in the strategy function.

The training module 1005 includes an updating unit, for updating an uncorrected first parameter using the corrected first parameter.

The input unit is further for inputting the accumulated error into a second error back propagation formula to calculate a corrected second parameter for each second parameter in the evaluation function.

The updating unit is further for updating an uncorrected second parameter using the corrected second parameter.

In an embodiment, the training module 1005 is further for simultaneously train the deep network using a plurality of threads.

In an embodiment, the training module 1005 is further for ending the training when a preset training end condition is met.

According to the above, since the three-dimensional virtual environment is a vivid restoration of, and thus is similar to, the actual environment in practice, training in the three-dimensional virtual environment makes it unnecessary to perform training using a real object in a real scene, thus improves the training efficiency and accuracy. The evaluation function is used to predict the predicted tracking position, the reward value and the evaluated value of the reward value are calculated using the predicted tracking position and the expected object position, and then the parameters of the strategy function and the parameters of the evaluation function are updated using the reward value and the evaluated value of the reward value, thus the training efficiency and the training accuracy of the deep network are improved.

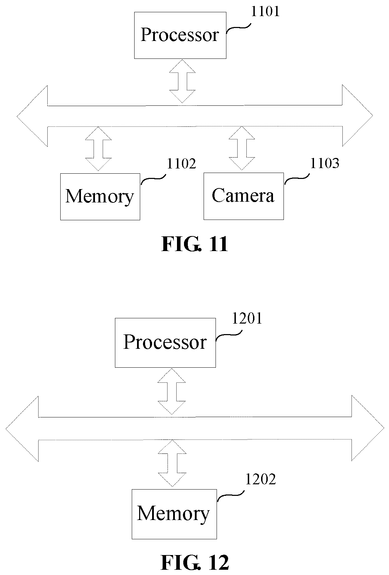

FIG. 11 is a block diagram of a terminal according to an embodiment of the present application. The terminal may be a mobile phone, a tablet computer, a laptop computer, a desktop computer, a server, or the like. The terminal includes: a processor 1101, a memory 1102 and a camera 1103.

The processor 1101 may be at least one of a single-core processor, a multi-core processor, an embedded chip, or a processor having computing capabilities.

The memory 1102 stores instructions executable by the processor. In an example, a computer-readable storage medium in the memory 1102 stores at least one instruction, at least one program, a code set, or an instruction set that is capable of being loaded and executed by the processor 1101 to implement any of the object tracking methods as shown in FIGs. 2a-4a.

In an example, the processor 1101 is for acquiring the i-th image frame captured by the camera 1103. The -ith image frame includes a moving object, and i is a natural number.

The processor 1101 is further for inputting the i-th image frame into a deep network which includes a feature extraction network and a strategy function.

The processor 1101 is further for extracting image features of the i-th image frame using the feature extraction network.

The processor 1101 is further for calculating respective output probabilities of n output actions using the image features and the strategy function. The output actions are actions for controlling the camera 1103. n is a natural number, and $n \geq 2$.

The processor 1101 is further for selecting the maximum output probability from the output probabilities of the n output actions.

The processor 1101 is further for controlling the camera 1103 to perform the output action corresponding to the maximum output probability so as to track the moving object.

The camera 1103 is for acquiring the image frame from a first-person view and executing the corresponding output action according to a received control instruction.

In an embodiment, embodiments of the present application also provide a computer-readable storage medium storing at least one instruction, at least one program, a code set, or an instruction set that is capable of being loaded and executed by the processor to implement any of the object tracking methods illustrated in FIGS. 2a-4a. In an embodiment, the computer-readable storage medium includes a high speed access memory, or a non-volatile memory.

FIG. 12 is a block diagram of a training terminal according to an embodiment of the present application. The training terminal may be a mobile phone, a tablet computer, a laptop computer, a desktop computer, a server, or the like. The training terminal includes a processor 1201 and a memory 1202.

The processor 1201 may be at least one of a single-core processor, a multi-core processor, an embedded chip, or a processor having computing capabilities.

The memory 1202 stores instructions executable by the processor. In an example, a computer-readable storage medium in the memory 1202 stores at least one instruction, at least one program, a code set, or an instruction set that is capable of being loaded and executed by the processor 1201 to implement any of the deep network training methods shown in FIGS. 5a-6.

In an embodiment, embodiments of the present application also provide a computer-readable storage medium having stored therein at least one instruction, at least one program, a code set, or an instruction set that is capable of being loaded and executed by the processor to implement any one of the deep network training methods illustrated in FIGS. 5a-6. In an embodiment, the computer-readable storage medium includes a high speed access memory, or a non-volatile memory.

It should be noted that when the active tracking device provided by the embodiments triggers the active tracking, the description uses the division of the functional modules described above merely as an example. In a practical application, the functions may be distributively implemented by different functional modules according to the needs, that is, the internal structure of the device is divided into different functional modules to complete all or a part of the functions described above. In addition, the active tracking device and the active tracking method provided by the embodiments belong to the same concept, and details of the implementation processes of the active tracking device are described in the method embodiments and will not be described in detail herein.

It should be noted that when the active tracking device provided by the embodiments triggers the active tracking, the description uses the division of the functional modules described above merely as an example. In a practical application, the functions may be distributively implemented by different functional modules according to the needs, that is, the internal structure of the device is divided into different functional modules to complete all or a part of the functions described above. In addition, the active tracking device and the active tracking method provided by the embodiments belong to the same concept, and details of the implementation processes of the active tracking device are described in the method embodiments and will not be described in detail herein.

The above-mentioned serial numbers of the embodiments of the present application are for description only and do not represent the advantages and disadvantages of the embodiments.

It will be appreciated by those of ordinary skill in the art that all or a portion of the steps for implementing the embodiments described above may be implemented by hardware, or hardware controlled by a program. The program may be stored in a computer-readable storage medium, such as a read-only memory, a magnetic or an optical disk, or the like.

The above described are only preferred embodiments of the present application and are not intended to limit the present application. Any modification, equivalent substitution, improvements, etc. made within the spirit and principles of the present application shall be within the scope of protection of the present application.

## Claims

1. An active tracking method, applicable to a terminal, comprising:

   acquiring an i-th image frame captured by a camera, wherein the i-th image frame includes a moving object, and i is a natural number;
   inputting the i-th image frame into a deep network which comprises a feature extraction network and a strategy function;
   extracting image features of the i-th image frame using the feature extraction network;

calculating respective output probabilities of n output actions using the strategy function and the image features, wherein the output actions are actions for controlling of the camera, n is a natural number, and n≥2; selecting a maximum output probability from the output probabilities of the n output actions; and controlling the camera to perform an output action corresponding to the maximum output probability to track the moving object.

**2.** The method of claim 1, wherein the feature extraction network comprises a convolutional neural network and a Long Short Time Memory (LSTM) neural network which are sequentially connected to each other; wherein extracting the image features of the i-th image frame using the feature extraction network comprises:

extracting a first feature matrix of the i-th image frame using the convolutional neural network; and extracting a second feature matrix of the i-th image frame using the LSTM neural network based on the first feature matrix of the i-th image frame and the image features of image frames preceding the i-th image frame, and taking the second feature matrix as the image features of the i-th image frame.

**3.** The method of claim 1, wherein the deep network is trained using sample image frames generated by a tracker tracking a moving object in a three-dimensional virtual environment.

**4.** A deep network training method, applicable to a training terminal, comprising:

constructing a three-dimensional virtual environment which includes a tracker and a moving object, wherein the tracker is for tracking the moving object in the three-dimensional virtual environment and acquiring image frames from a first-person view when tracking the moving object, and the moving object is for moving along a preset path in the three-dimensional virtual environment; acquiring a sample image frame acquired by the tracker; calculating a reward value corresponding to the sample image frame using a real-time tracking position of the moving object relative to the tracker in the three-dimensional virtual environment and a preset expected object position, wherein the reward value represents a matching degree between the real-time tracking position and the expected object position; inputting the sample image frame into a feature extraction network of a deep network to obtain image features, and inputting the image features into a preset evaluation function to calculate an evaluated value of the reward value corresponding to the sample image frame, wherein the evaluated value of the reward value represents a matching degree between a predicted tracking position predicted by the evaluation function and the expected object position; and training the deep network and the evaluation function using an error back propagation algorithm and an error between the reward value and the evaluated value of the reward value.

**5.** The method of claim 4, wherein training the deep network and the evaluation function using the error back propagation algorithm and the error between the reward value and the evaluated value of the reward value comprises:

inputting the image features of the sample image frames into a strategy function of the deep network to calculate respective predicted output probabilities of n output actions; for each first parameter of the strategy function, inputting the prediction output probabilities and an accumulated error into a first error back propagation formula to obtain a corrected first parameter, and updating an uncorrected first parameter using the corrected first parameter, wherein the accumulated error is a difference between a sum of T reward values accumulated in consecutive T steps and a sum of estimated values of the T reward values accumulated in the consecutive T steps, T is a preset threshold, and each time an image frame is inputted into the deep network is counted as one step; and for each second parameter of the evaluation function, inputting the accumulated error into a second error back propagation formula to obtain a corrected second parameter, and updating an uncorrected second parameter using the corrected second parameter.

**6.** The method of claim 5, wherein the first error back propagation formula is:

$$\theta = \theta' + \alpha(R_t - V(S_t))\nabla_\theta \log \pi(a_t | S_t) + \beta \nabla_\theta H(\pi(\bullet | S_t))$$

wherein θ' is the uncorrected first parameter, $\alpha$ is a learning rate, $R_t - V(S_t)$ is the accumulated error, $R_t$ is the sum of T reward values accumulated in the consecutive T steps, $V(S_t)$ is the sum of the evaluated values of the T reward values accumulated in the consecutive T steps, $\log\pi(a_t|S_t)$ is a predicted output probability, H is an entropy regular term, and $\beta$ is a regularization factor.

**7.** The method of claim 5, the second error back propagation formula is:

$$\varphi = \varphi^{'} - \alpha\nabla_{\theta}\frac{1}{2}(R_t - V(S_t))^2$$

wherein $\varphi$ is the uncorrected second parameter, $R_t - V(S_t)$ is the accumulated error, $R_t$ is the sum of the T reward values accumulated in the consecutive T steps, $V(S_t)$ is the sum of the reward values of the T reward values accumulated in the consecutive T steps, and $\alpha$ is a learning rate.

**8.** The method of claim 5, wherein the reward value is calculated by:

$$r = A - (\frac{\sqrt{x^2 + (y - d)^2}}{c} + \lambda|a|)$$

wherein a Cartesian coordinate system is established by with a position of the tracker as an origin, a direction the tracker is facing in the three-dimensional virtual environment as a positive direction of a y axis, and a horizontal rightward direction of the tracker in the three-dimensional virtual environment as a positive direction of an x axis, wherein A is a maximum value of the reward value, r is the reward value corresponding to the sample image frame, d is a preset offset, c is a preset normalization parameter, $\lambda$ is a preset weight factor, and a is an angle between a line connecting the moving object and the tracker and the positive direction of the y axis.

**9.** The method of any of claims 4 to 8, further comprising:

training the deep network simultaneously using a plurality of threads;
wherein the plurality of threads use an initial value of a first parameter and an initial value of a second parameter at beginning of simultaneously training the deep network, and asynchronously update the first parameter and the second parameter during training;
wherein in asynchronous updating, updates of the first parameter by any two of the threads do not affect each other, and/or updates of the second parameter by any two of the threads do not affect each other.

**10.** The method of any of claims 4 to 8, further comprising ending the current training when a preset training end condition is met;
wherein the preset training end condition comprises:

the number of image frames inputted to the deep network reaches a first preset threshold,
or
a sum of m reward values accumulated in consecutive m steps reaches a second preset threshold, wherein m is a positive integer.

**11.** An active tracking device, comprising:

a first acquiring module, for acquiring an i-th image frame captured by a camera, wherein the i-th image frame includes a moving object, and i is a natural number;
a first inputting module, for inputting the i-th image frame into a deep network which comprises a feature extraction network and a strategy function, the deep network is a neural network trained in advance using a three-dimensional virtual environment;
an extracting module, for extracting image features of the i-th image frame using the feature extraction network;
a first calculating module, for calculating respective output probabilities of n output actions using the strategy function and the image features, wherein the output actions are actions for controlling the camera, n is a natural number, and n≥2;

a selecting module, for selecting a maximum output probability from the output probabilities of the n output actions; and

a controlling module, for controlling the camera to perform an output action corresponding to the maximum output probability to track the moving object.

12. A deep network training device, comprising:

an establishing module, for establishing a three-dimensional virtual environment which includes a tracker and a moving object, wherein the tracker is for tracking the moving object in the three-dimensional virtual environment and acquiring image frames from a first-person view when tracking the moving object, and the moving object is for moving along a preset path in the three-dimensional virtual environment;

a second acquiring module, for acquiring a sample image frame acquired by the tracker;

a second calculating module, for calculating a reward value corresponding to the sample image frame using a real-time tracking position of the moving object relative to the tracker in the three-dimensional virtual environment and a preset expected object position, wherein the reward value represents a matching degree between the real-time tracking position and an expected object position;

a second inputting module, for inputting the sample image frame into a feature extraction network of a deep network to obtain image features;

the inputting module is further for inputting the image features into a preset evaluation function to calculate an evaluated value of the reward value corresponding to the sample image frame, wherein the evaluated value of the reward value represents a matching degree between a predicted tracking position predicted by the evaluation function and the expected object position; and

a training module, for training the deep network and the evaluation function using an error back propagation algorithm based on an error between the reward value and the evaluated value of the reward value.

13. An active tracking system, comprising: a server and a terminal which are connected via a network; wherein, the terminal is for acquiring an i-th image frame captured by a camera, the i-th image frame includes a moving object; the terminal is further for sending the i-th image frame to the server;

the server comprises a deep network which comprises a feature extraction network and a strategy function;

the server is for extracting image features of the i-th image frame using the feature extraction network;

the server is further for calculating respective output probabilities of n output actions using the strategy function and the image features, wherein the output actions are actions for controlling the camera, and $n \geq 2$;

the server is further for selecting a maximum output probability from the output probabilities of the n output actions;

the server is further for generating a control instruction according to an output action corresponding to the maximum output probability and sending the control instruction to the terminal; and

the terminal is further for controlling the camera to perform the output action corresponding to the maximum output probability according to the control instruction to track the moving object.

14. A terminal, comprising a processor, a memory and a camera, wherein the memory stores at least one instruction, at least one program, a code set or an instruction set;

the processor is for acquiring an i-th image frame captured by the camera, wherein the i-th image frame comprises a moving object, and i is a natural number;

the processor is further for inputting the i-th image frame into a deep network which comprises a feature extraction network and a strategy function;

the processor is further for extracting image features of the i-th image frame using the feature extraction network;

the processor is further for calculating respective output probabilities of n output actions using the strategy function and the image features, wherein the output actions are actions for controlling the camera, n is a natural number, and $n \geq 2$;

the processor is further for selecting a maximum output probability from the output probabilities of the n output actions; and

the processor is further for controlling the camera to perform the output action corresponding to the maximum output probability to track the moving object.

15. The terminal of claim 14, wherein the terminal is an unmanned aerial vehicle, or, the terminal is a robot, or, the terminal is an unmanned automobile.

16. A computer-readable storage medium, having stored therein at least one instruction, at least one program, a code set, or an instruction set that is capable of being loaded and executed by a processor to implement the active tracking method of any of claims 1 to 3, and/or the deep network training method of any of claims 4 to 10.

**FIG. 1**

| | |
|---|---|
| acquiring the i-th image frame captured by a camera | 201 |
| sending the i-th image frame to a feature extraction network of a deep network | 202 |
| extracting image features of the image frame using the feature extraction network | 203 |
| calculating respective output probabilities of n output actions using the image features and the strategy function | 204 |
| selecting the maximum output probability from the output probabilities of the n output actions | 205 |
| controlling the camera to perform the output action corresponding to the maximum output probability | 206 |

**FIG. 2a**

**FIG. 2b**

```
┌─────────┐                                    ┌──────────┐
│ Server  │                                    │ Terminal │
└────┬────┘                                    └─────┬────┘
     │                            ┌────────────────────────────────────┐
     │                            │ 301. acquiring the i-th image frame │
     │                            │        captured by a camera         │
     │                            └────────────────────────────────────┘
     │         302. sending the i-th image frame to the server
     │◄─────────────────────────────────────────────────────┤
┌────┴──────────────────────────────┐                       │
│ 303. extracting image features of  │                      │
│    the i-th image frame using a    │                      │
│  feature extraction network        │                      │
└────────────────────────────────────┘                      │
┌───────────────────────────────────┐                       │
│ 304. calculating respective output │                      │
│  probabilities of n output actions │                      │
│   using a strategy function and    │                      │
│       the image features           │                      │
└────────────────────────────────────┘                      │
┌───────────────────────────────────┐                       │
│ 305. selecting the maximum output  │                      │
│ probability from the output        │                      │
│ probabilities of the n output      │                      │
│ actions                            │                      │
└────────────────────────────────────┘                      │
┌───────────────────────────────────┐                       │
│ 306. generating a control          │                      │
│ instruction using the output       │                      │
│ action corresponding to the        │                      │
│ maximum output probability         │                      │
└────────────────────────────────────┘                      │
     │   307. sending the control instruction to the        │
     │                     terminal                         │
     ├─────────────────────────────────────────────────────►│
     │                            ┌────────────────────────────────────┐
     │                            │ 308. controlling the camera to     │
     │                            │ perform the output action          │
     │                            │ corresponding to the maximum       │
     │                            │ output probability according to    │
     │                            │ the control instruction            │
     │                            └────────────────────────────────────┘
```

**FIG. 3a**

**FIG. 3b**

Feature extraction network

| Convolutional neural network | LSTM neural network | Server | | Terminal |

401. acquiring the i-th image frame captured by a camera

402. sending the i-th image frame to the server

403. extracting a first feature matrix of the image frame using the CNN

404. sending the first feature matrix to the LSTM

405. extracting a second feature matrix of the current image frame using images features of image frames preceding the current image frame and the first feature matrix

406. taking the second feature matrix as the image features of the image frame

407. sending the image features to the strategy function

408. calculating respective output probabilities of n output actions using the image features

409. selecting the maximum output probability from the output probabilities of the n output actions

410. generating a control instruction using the output action corresponding to the maximum output probability

411. sending the control instruction to the terminal

412. controlling the camera to perform the output action corresponding to the maximum output probabilities according to the control instruction

## FIG. 4a

40

401   412

Server 42

Deep network 43

Feature extraction network 44

Convolutional neural network — First feature matrix — LSTM neural network — Second feature matrix

441   442

Strategy function   45

Moving forward 0.2

Turning leftward 0.1

Turning rightward 0.65

Moving backward 0.05

Control instruction   46

## FIG. 4b

24

41    42    43

$$\begin{bmatrix} 1 & 2 & 3 \\ 2 & 5 & 7 \end{bmatrix}$$

44    45    46

**FIG. 4c**

| Image features of the i-th image frame | → ∫ → | Second feature of the i-th image frame (i.e., image features of the i-th image frame) | → ∫ → | Second feature matrix of the (i+1)-th image frame (i.e., image features of the (i+1)-th image frame) |

First feature matrix of the i-th image frame

First feature matrix of the (i+1)-th image frame

**FIG. 4d**

| establishing a three-dimensional virtual environment | 501 |

| acquiring a sample image frame captured by the tracker | 502 |

| calculating a reward value of the sample image frame using the real-time tracking position of the moving object relative to the tracker in the three-dimensional virtual environment and a preset expected object position | 503 |

| inputting the sample image frame into a feature extraction network of a deep network to obtain image features | 504 |

| inputting the image features into a preset evaluation function to calculate an evaluated value of the reward value of each sample image frame | 505 |

| training the deep network and the evaluation function using an error back propagation algorithm based on the error between the reward value and the evaluated value of the reward value | 506 |

**FIG. 5a**

**FIG. 5b**

**FIG. 5c**

**FIG. 5d**

**FIG. 5e**

```
┌─────────────────────────────────────────────────────────────┐
│      establishing a three-dimensional virtual environment     │──601
└─────────────────────────────────────────────────────────────┘
                              │
                              ▼
┌─────────────────────────────────────────────────────────────┐
│        acquiring a sample image frame collected by the tracker │──602
└─────────────────────────────────────────────────────────────┘
                              │
                              ▼
┌─────────────────────────────────────────────────────────────┐
│ calculating the reward value of the sample image frame using the real- │
│ time tracking position of the moving object relative to the tracker in the │──603
│ three-dimensional virtual environment and the preset expected object │
│                        position                               │
└─────────────────────────────────────────────────────────────┘
                              │
                              ▼
┌─────────────────────────────────────────────────────────────┐
│ inputting the sample image frame into a feature extraction network of │──604
│         the deep network to obtain image features             │
└─────────────────────────────────────────────────────────────┘
                              │
                              ▼
┌─────────────────────────────────────────────────────────────┐
│    inputting the image features into a preset evaluation function to │
│ calculate an evaluated value of the reward value of each sample image │──605
│                         frame                                 │
└─────────────────────────────────────────────────────────────┘
                              │
                              ▼
┌─────────────────────────────────────────────────────────────┐
│ calculating an accumulated error between the sum of T reward values │
│ accumulated in consecutive T steps and the sum of evaluated values of │──606
│    the T reward values accumulated in the consecutive T steps │
└─────────────────────────────────────────────────────────────┘
                              │
                              ▼
┌─────────────────────────────────────────────────────────────┐
│ inputting the image features of the sample image frame into a strategy │
│ function to calculate respective prediction output probabilities of n │──607
│                     output actions                            │
└─────────────────────────────────────────────────────────────┘
            │                                    │
            ▼                                    ▼
┌───────────────────────────┐        ┌───────────────────────────┐
│   inputting the predicted output │        │   inputting the accumulated │
│ probability and the accumulated │──608   │   error into a second error │
│   error into a first error back │        │ back propagation formula to │──610
│ propagation formula to calculate │        │   calculate a corrected second │
│   a corrected first parameter    │        │        parameter            │
└───────────────────────────┘        └───────────────────────────┘
            │                                    │
            ▼                                    ▼
┌───────────────────────────┐        ┌───────────────────────────┐
│   updating an uncorrected first │──609   │   updating an uncorrected │
│ parameter using the corrected │        │ second parameter using the │──611
│        first parameter         │        │   corrected second parameter │
└───────────────────────────┘        └───────────────────────────┘
            │                                    │
            └──────────────────┬─────────────────┘
                               ▼
            ┌─────────────────────────────────────────────┐
            │ ending the present training process when a preset │──612
            │       training end condition is met           │
            └─────────────────────────────────────────────┘
```

**FIG. 6**

**FIG. 7a**

**FIG. 7b**

**FIG. 7c**

**FIG. 7d**

```
┌─────────────────────────────────────────────────────────┐
│   establishing a three-dimensional virtual environment   │──801
└─────────────────────────────────────────────────────────┘
                              │
                              ▼
┌─────────────────────────────────────────────────────────┐
│     acquiring test image frames acquired by the tracker   │──802
└─────────────────────────────────────────────────────────┘
                              │
                              ▼
┌─────────────────────────────────────────────────────────┐
│  calculating a reward value for each test image frame using │
│  a real-time tracking position of the moving object relative │──803
│  to the tracker in the three-dimensional virtual environment │
│          and a preset expected object position            │
└─────────────────────────────────────────────────────────┘
                              │
                              ▼
┌─────────────────────────────────────────────────────────┐
│  inputting each test image frame one by one into a feature │
│   extraction network of the deep network to obtain image  │──804
│                        features                           │
└─────────────────────────────────────────────────────────┘
                              │
                              ▼
┌─────────────────────────────────────────────────────────┐
│ inputting the image features of the test image frames into │
│    a strategy function to calculate predicted output      │──805
│            probabilities of n output actions              │
└─────────────────────────────────────────────────────────┘
                              │
                              ▼
┌─────────────────────────────────────────────────────────┐
│ ending the present test when a preset test end condition is │──806
│                          met                              │
└─────────────────────────────────────────────────────────┘
```

**FIG. 8**

first acquiring module — 91

first inputting module — 92

extracting module — 93

first calculating module — 94

selecting module — 95

controlling module — 96

**FIG. 9**

establishing module — 1001

second acquiring module — 1002

second inputting module — 1003

second calculating module — 1004

training module — 1005

**FIG. 10**

Processor 1101

Memory 1102    Camera 1103

**FIG. 11**

Processor 1201

Memory 1202

**FIG. 12**

## INTERNATIONAL SEARCH REPORT

| International application No. |
|---|
| **PCT/CN2018/088621** |

**A.  CLASSIFICATION OF SUBJECT MATTER**

G06T 7/292(2017.01)i

According to International Patent Classification (IPC) or to both national classification and IPC

**B.  FIELDS SEARCHED**

Minimum documentation searched (classification system followed by classification symbols)

G06T

Documentation searched other than minimum documentation to the extent that such documents are included in the fields searched

Electronic data base consulted during the international search (name of data base and, where practicable, search terms used)

WPI, EPODOC, CNPAT, CNKI, IEEE: 跟踪, 摄像头, 帧, 图像, 网络, 动作, 概率, 训练, track, camera, frame, image, network, action, probability, train

**C.  DOCUMENTS CONSIDERED TO BE RELEVANT**

| Category* | Citation of document, with indication, where appropriate, of the relevant passages | Relevant to claim No. |
|---|---|---|
| X | CN 106709936 A (BEIJING UNIVERSITY OF TECHNOLOGY) 24 May 2017 (2017-05-24) claims 1 and 2 | 1-3, 11, 13-16 |
| A | CN 106845430 A (DONGHUA UNIVERSITY) 13 June 2017 (2017-06-13) entire document | 1-16 |
| A | CN 106934338 A (ZHEJIANG HANFAN SOFTWARE TECH CO., LTD.) 07 July 2017 (2017-07-07) entire document | 1-16 |
| A | US 2017163879 A1 (CANON KABUSHIKI KAISHA) 08 June 2017 (2017-06-08) entire document | 1-16 |

☐ Further documents are listed in the continuation of Box C.  ☑ See patent family annex.

| * | Special categories of cited documents: | "T" | later document published after the international filing date or priority date and not in conflict with the application but cited to understand the principle or theory underlying the invention |
|---|---|---|---|
| "A" | document defining the general state of the art which is not considered to be of particular relevance | | |
| "E" | earlier application or patent but published on or after the international filing date | "X" | document of particular relevance; the claimed invention cannot be considered novel or cannot be considered to involve an inventive step when the document is taken alone |
| "L" | document which may throw doubts on priority claim(s) or which is cited to establish the publication date of another citation or other special reason (as specified) | "Y" | document of particular relevance; the claimed invention cannot be considered to involve an inventive step when the document is combined with one or more other such documents, such combination being obvious to a person skilled in the art |
| "O" | document referring to an oral disclosure, use, exhibition or other means | "&" | document member of the same patent family |
| "P" | document published prior to the international filing date but later than the priority date claimed | | |

| Date of the actual completion of the international search | Date of mailing of the international search report |
|---|---|
| **10 August 2018** | **27 August 2018** |

| Name and mailing address of the ISA/CN | Authorized officer |
|---|---|
| **State Intellectual Property Office of the P. R. China (ISA/ CN)** **No. 6, Xitucheng Road, Jimenqiao Haidian District, Beijing 100088** **China** | |
| Facsimile No. **(86-10)62019451** | Telephone No. |

Form PCT/ISA/210 (second sheet) (January 2015)

**INTERNATIONAL SEARCH REPORT**
**Information on patent family members**

International application No.

**PCT/CN2018/088621**

| Patent document cited in search report | | | Publication date (day/month/year) | Patent family member(s) | | | Publication date (day/month/year) |
|---|---|---|---|---|---|---|---|
| CN | 106709936 | A | 24 May 2017 | None | | | |
| CN | 106845430 | A | 13 June 2017 | None | | | |
| CN | 106934338 | A | 07 July 2017 | None | | | |
| US | 2017163879 | A1 | 08 June 2017 | JP | 2017121042 | A | 06 July 2017 |

Form PCT/ISA/210 (patent family annex) (January 2015)

**EP 3 675 035 A1**

REFERENCES CITED IN THE DESCRIPTION

*This list of references cited by the applicant is for the reader's convenience only. It does not form part of the European patent document. Even though great care has been taken in compiling the references, errors or omissions cannot be excluded and the EPO disclaims all liability in this regard.*

**Patent documents cited in the description**

- CN 2017107433572